# EUROPÄISCHE PATENTSCHRIFT

(11) **EP 4 013 212 B1**
(45) Veröffentlichungstag und Bekanntmachung des Hinweises auf die Patenterteilung: **08.04.2026**
(21) Anmeldenummer: 20756806.4
(22) Anmeldetag: 10.08.2020
(51) Int. Cl.: A01D 33/08

(54) **VORRICHTUNG ZUM REINIGEN VON SCHMALEN WURZELFRÜCHTEN, ENTSPRECHENDE REINIGUNGSAPPARAT, ERNTE-UND REINIGUNGSMASCHINE UND VERFAHREN**
UNIT FOR CLEANING NARROW ROOT CROPS, CORRESPONDING CLEANING APPARATUS, HARVESTING AND CLEANING MACHINE AND METHOD
UNITÉ DE NETTOYAGE DE PLANTES À RACINES ÉTROITES, AINSI QU'APPAREIL DE NETTOYAGE, MACHINE DE RÉCOLTE ET DE NETTOYAGE ET PROCÉDÉ ASSOCIÉS

(30) Priorität: 13.08.2019 DE 102019121768
(43) Veröffentlichungstag der Anmeldung: 22.06.2022
(73) Patentinhaber: Exel Industries, 51200 Epernay (FR)
(72) Erfinder: POLSTER, Sebastian, 84069 Schierling (DE)
(74) Vertreter: Lavoix
(86) Internationale Anmeldenummer: PCT/EP2020/072374
(87) Internationale Veröffentlichungsnummer: WO 2021/028381

(56) Entgegenhaltungen:
- EP-A1- 2 298 057
- EP-A2- 0 264 891
- EP-A2- 1 310 148
- WO-A1-92/04816
- GB-A- 2 145 612
- US-A- 3 267 502
- US-A- 5 069 292

## Beschreibung

Die vorliegende Erfindung betrifft eine Vorrichtung zum Reinigen von schmalen Wurzelfrüchten.

Die schmalen Wurzelfrüchte sind zum Beispiel: Löwenzahnwurzel, Petersilienwurzel, Chicoréewurzel (Cichorium intybus var. foliosum), Pastinakenwurzel (Pastinaca sativa), Karottenwurzel oder Maniocwurzel (Manihot esculenta).

Um Wurzelfrüchte von unerwünschten Verunreinigungen zu trennen, wie z.B. Erde oder Steinen, die beim Ernte- oder Rodevorgang mitgeführt werden, sind aus dem Stand der Technik Reinigungsvorrichtungen bekannt.

Aus der EP2298057 ist ein Walzenreiniger in Kombination mit einem Siebbandreiniger bekannt. Der Siebbandreiniger ist bezüglich des Walzenreinigers beweglich, um die Länge der Reinigungsstrecke an den Verschmutzungsgrad des Erntegutes anzupassen. Diese Vorrichtung ist im Wesentlichen zum Reinigen von Zuckerrüben vorgesehen.

Aus der GB2145612 ist eine Trennvorrichtung bekannt, die Erdreich und/oder Steine von Kartoffeln trennt. Die Trennvorrichtung weist zwei Sternwalzen und eine Erdklumpenwalze ("clod roller") auf, über die das Trenngut geführt wird. Erdreich und Steine fallen durch die Sternwalzen und Kartoffeln werden oberhalb der Walzen abtransportiert.

Aus der US5,069,292 ist eine Reinigungsvorrichtung für Wurzel- oder Knollenfrüchte, wie Kartoffeln, Zwiebeln oder Kohlrabi, bekannt. Die Reinigungsvorrichtung weist Rollen und zwei Bandförderer auf, die eine mäanderförmige Reinigungsstrecke bilden, durch die das Trenngut geführt wird.

Aus der US3267502 ist eine Vorrichtung zum Reinigen von Wurzelfrüchten bekannt.

Die bekannten Reinigungsvorrichtungen sind nicht dazu geeignet schmale Wurzelfrüchte wirtschaftlich von Erde und Steinen zu trennen.

Die vorliegende Erfindung hat zum Ziel den Trennvorgang von schmalen Wurzelfrüchten, sowie deren Erntevorgang effizienter zu gestalten.

Die vorliegende Erfindung hat insbesondere die Aufgabe, den Nachteilen des Standes der Technik abzuhelfen.

Zu diesem Zweck schlägt sie eine Vorrichtung zum Reinigen von schmalen Wurzelfrüchten vor, die die Merkmale des Anspruches 1 aufweist.

Ein Vorteil dieser Vorrichtung ist, dass die Walzenvorrichtung eine gründliche Trennung der Wurzelfrüchte von Objekten erlaubt, die grösser als die Wurzelfrüchte sind, ohne die Wurzelfrüchte fälschlicherweise mit diesen größeren Objekten auszutragen.

Die erste Fördereinrichtung erlaubt nachgeschaltet eine saubere Trennung der Wurzelfrüchte von Objekten die kleiner sind als die Wurzelfrüchte.

Die Merkmale des Anspruches 2 erlauben eine noch bessere Trennung des Grobgutes.

Die Merkmale der Ansprüche 3 und 4 erlauben eine platzsparende Bauweise der Vorrichtung bei relativ langer Reinigungsstrecke und eine zuverlässige Ausbringung des Grobgutes.

Die Merkmale des Anspruches 5 und 6 erlauben eine wirtschaftliche Fertigung der Vorrichtung und eine gute Trennung der Wurzelfrüchte vom Feinstgut.

Die Merkmale der Ansprüche 7 und 8 definieren die Wurzeltypen für die die Reinigungsvorrichtung besonders gute Ergebnisse erzielt.

Die Erfindung hat ebenfalls einen Reinigungsapparat zum Reinigen von schmalen Wurzelfrüchten gemäß den Ansprüchen 9 und 10 zum Gegenstand. Mit diesem Reinigungsapparat lassen sich die Wurzelfrüchte vorreinigen und, falls notwendig von einer Bunkeranlage oder einer Erntevorrichtung zur Vorrichtung zum Reinigen transportieren und der Wirkungsgrad steigern.

Die Erfindung hat ebenfalls eine Ernte- und Reinigungsmaschine gemäß Anspruch 11 zum Gegenstand. Damit lassen sich die Wurzelfrüchte direkt nach dem Ernten wirtschaftlich reinigen.

Die Erfindung hat ebenfalls ein Verfahren zum Reinigen von schmalen Wurzelfrüchten gemäß Anspruch 12 zum Gegenstand.

Die Erfindung wird anhand der folgenden beispielhaften Beschreibung erläutert, die Bezug nimmt auf die anliegenden Zeichnungen, von denen:
- die Figur 1 eine schematische Längsansicht einer erfindungsgemäßen Ernte- und Reinigungsmaschine zum Ernten und Reinigen von schmalen Wurzelfrüchten während des Ernte- und Reinigungsvorgangs, und
- die Figur 2 eine schematische Aufsicht der Ernte- und Reinigungsmaschine von Figur 1 ist.

In der vorliegenden Beschreibung der Erfindung werden Eignungsangaben, wie "dazu ausgebildet", dahingehend verwendet, dass die zugehörige Aktion mitoffenbart wird. Zum Beispiel umfasst der Ausdruck "dazu ausgebildet zu transportieren" auch die Offenbarung "transportiert".

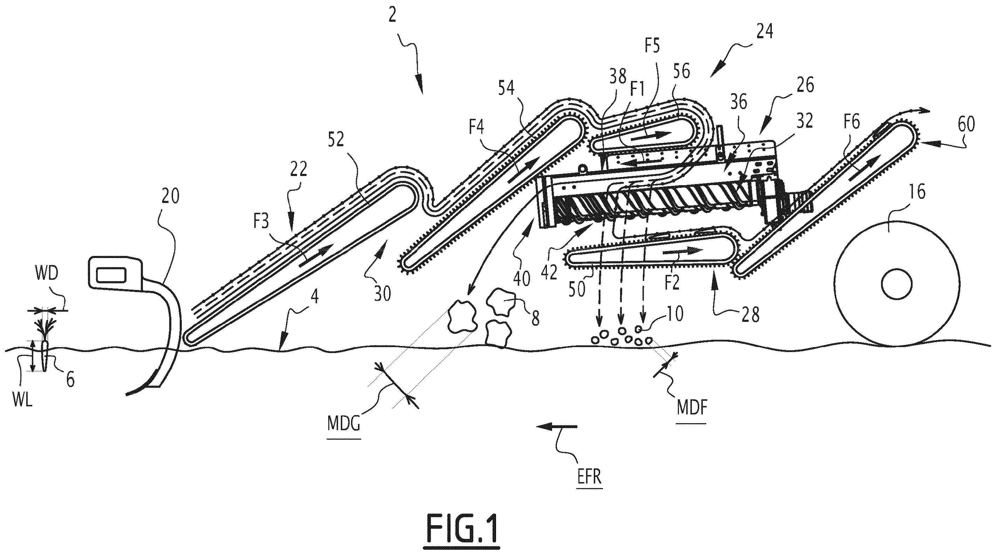

Die Figur 1 zeigt schematisch eine erfindungsgemäße Ernte- und Reinigungsmaschine 2.

Die Ernte- und Reinigungsmaschine 2 dient zum Ernten von im Boden 4 befindlichen schmalen Wurzelfrüchten 6.

Die Bezeichnung "schmale Wurzelfrüchte" bedeutet im Kontext der vorliegenden Erfindung Wurzelfrüchte, die ein Verhältnis von Wurzellänge zu maximalem Wurzeldurchmesser WL/WDₘₐₓ grösser als 2, vorzugsweise grösser als 4, grösser als 5; grösser als 6, grösser als 7, grösser als 8 oder grösser als 9 aufweisen. Die Wurzellänge WL von ist hierbei typischerweise von 5 cm bis 1m und der maximale Wurzeldurchmesser, d.h. der Durchmesser an der dicksten Stelle ist von 5mm bis 5cm.

Vorzugsweise sind die schmalen Wurzelfrüchte 6 aus der Gruppe gebildet von: Löwenzahnwurzel, Petersilienwurzel, Chicoréewurzel (Cichorium intybus var. foliosum), Pastinakenwurzel (Pastinaca sativa), Karottenwurzel, Maniocwurzel (Manihot esculenta).

Der Boden 4 enthält, außer den Wurzelfrüchten 6, Erdreich, das Grobgut 8 und Feinstgut 10 umfasst. Das Grobgut 8 ist zu Beispiel Steine oder Erdklumpen, die eine relative Größe aufweisen, die über der Größe der Wurzelfrüchte liegt. Insbesondere weist das Grobgut 8 eine minimale Dimension MDG auf, die grösser ist als der maximale Wurzeldurchmesser WDₘₐₓ.

Das Feinstgut 10 sind zum Beispiel Erdkrumen, Steine oder Sand, die wesentlich kleiner sind als die Wurzelfrüchte. Insbesondere weist das Feinstgut 10 eine maximale Dimension MDF auf, die kleiner ist als der maximale Wurzeldurchmesser WDₘₐₓ.

Die Ernte- und Reinigungsmaschine 2 definiert eine Erntefahrtrichtung EFR, oder allgemein "Fahrtrichtung", die auf den Figuren von rechts nach links verläuft und generell in Richtung der Vorderseite der Ernte- und Reinigungsmaschine 2 gerichtet ist.

Die Ernte- und Reinigungsmaschine 2 weist Räder 16 und einen nicht dargestellten Rahmen auf. Weiter umfasst die Ernte- und Reinigungsmaschine 2 eine Erntevorrichtung 20, die dazu ausgebildet ist die schmalen Wurzelfrüchte 6 und das Erdreich umfassend Grobgut 8 und Feinstgut 10 aus dem Boden zu fördern und als Trenngut 22 abzulegen. Das Trenngut 22 kann dabei ebenfalls Klumpen aus Wurzelfrüchten 6 und anhaftendem Erdreich oder Steinen umfassen, die die Größe des Grobguts 8 aufweisen.

Die Ernte und Reinigungsmaschine 2 umfasst einen Reinigungsapparat 24 zum Reinigen der schmalen Wurzelfrüchten. Der Reinigungsapparat 24 umfasst eine Vorrichtung 26 zum Reinigen von schmalen Wurzelfrüchten, wobei diese Vorrichtung eine erste Fördereinrichtung 28 aufweist.

Der Reinigungsapparat 24 umfasst weiterhin eine zweite Fördereinrichtung 30, die zwischen der Erntevorrichtung 20 und der Vorrichtung 26 angeordnet ist und dazu ausgebildet ist das Trenngut 22 von der Erntevorrichtung 20 zur Vorrichtung 26 zu transportieren.

Im in Figur 1 dargestellten Trenngut 22 ist der Strom aus schmalen Wurzelfrüchten 6 als gepunktet-gestrichelte Linie dargestellt. Der Strom aus Grobgut 8 ist als durchgezogene Linie dargestellt und der Strom aus Feinstgut 10 ist als gestrichelte Linie dargestellt.

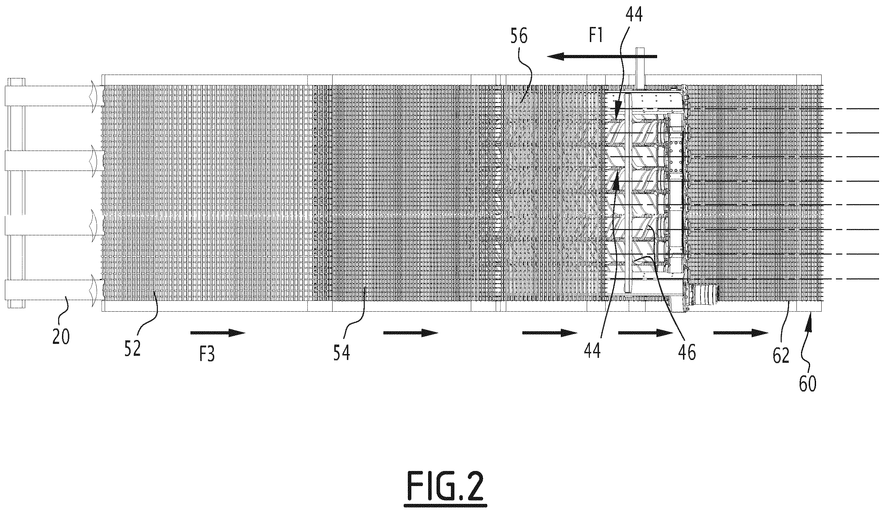

Die Vorrichtung 26 zum Reinigen von schmalen Wurzelfrüchten umfasst eine Walzenvorrichtung 32 umfassend mindestens zwei drehbare Walzen 34, die einen Trennguteingang 36, eine Trennstrecke 38, einen Grobgutausgang 40, einen Feingutausgang 42 und einen Walzenspalt 44 (siehe Figur 2) bilden. Die Förderrichtung der Walzenvorrichtung 32 bzw. der Trennstrecke 38 vom Trennguteingang zum Grobgutausgang, ist mit F1 bezeichnet.

Der Trennguteingang 36 ist vorzugsweise in Fahrtrichtung EFR hinter dem Grobgutausgang 40 angeordnet. Alternativ ist der Trennguteingang 36 in Fahrtrichtung in gleicher Höhe wie der Grobgutausgang 40 angeordnet. Der Trennguteingang 36 kann auch oder zusätzlich in einer Richtung quer zur Fahrtrichtung EFR seitlich vom Grobgutausgang 40 angeordnet sein. Die Förderrichtung F1 ist im vorliegenden Falle in Fahrtrichtung EFR nach vorne gerichtet. Die Förderrichtung F1 kann auch nach schräg vorne oder seitlich gerichtet sein.

Die Trennstrecke 38 ist durch eine Oberseite der Walzen 34 gebildet. Der Feingutausgang 42 ist unterhalb des Walzenspalts 44 angeordnet und der Grobgutausgang 40 liegt an dem, dem Trennguteingang 36 gegenüberliegenden Ende der Trennstrecke.

Der Walzenspalt 44 ist groß bzw. breit genug um die schmalen Wurzelfrüchte 6 zum Feingutausgang hindurchpassieren zu lassen und klein bzw. schmal genug, um das Grobgut 8, nicht passieren zu lassen oder zurückzuhalten und zum Grobgutausgang 40 zu transportieren.

Die Vorrichtung 26 zum Reinigen von schmalen Wurzelfrüchten weist im vorliegenden Falle vier Walzenpaare auf, von denen jedes durch zwei Walzen 34 gebildet ist, die gegenläufig angetrieben sind, so dass sich die Walzenoberflächen von oben durch den Walzenspalt bewegen. Eine Walze 34 eines Walzenpaares ist um eine Achse A-A drehbar und die andere Walze 34 eines Walzenpaares ist um eine Achse B-B drehbar (Figur 2). Die Achsen A-A und B-B sind im Wesentlichen parallel. Die Vorrichtung 26 zum Reinigen von schmalen Wurzelfrüchten kann auch mehr oder weniger als vier Walzenpaare aufweisen.

Jede der drehbaren Walzen 34 weist auf ihrer Oberfläche eine Reinigungs- und Transportwendel 46 auf, die dazu ausgebildet ist, Verunreinigungen, die das Grobgut 8 umfassen, von den Wurzelfrüchten 6 zu lösen und das Grobgut zum Grobgutausgang zu transportieren. Die Reinigungs- und Transportwendeln 46 der zwei drehbaren Walzen 34 eines Walzenpaares sind vorzugsweise gegenläufig.

Die Trennstrecke 38, bzw der Walzenspalt 44 sowie die Walzen 34 sind so angeordnet und ausgebildet, dass Klumpen aus Wurzelfrüchten 6 und anhaftendem Erdreich oder Steinen, wobei diese Klumpen die Größe des Grobguts 8 aufweisen, durch die Walzen 34 aufgebrochen werden und zumindest die Wurzelfrüchte 6 von den Klumpen getrennt werden und durch den Walzenspalt hindurchtreten.

Die erste Fördereinrichtung 28 ist der Walzenvorrichtung 32 nachgeschaltet und ist unterhalb des Walzenspalts 44 am Feingutausgang 42 angeordnet. Die erste Fördereinrichtung 28 ist dazu ausgebildet sämtliche, durch den Walzenspalt hindurchtretenden, schmalen Wurzelfrüchte 6 aufzunehmen.

Die erste Fördereinrichtung 28 weist eine Förderrichtung F2 auf, die entgegengesetzt zur Förderrichtung F1 der Trennstrecke 38 ist.

Allgemein umfasst die erste Fördereinrichtung 28 ein bewegliches Transport- oder Siebelement, insbesondere ein Element mit Aussparungen, das dazu ausgebildet ist, Feinstgut 10, das eine maximale Dimension, die kleiner ist als der maximale Wurzeldurchmesser, von den Wurzelfrüchten 6 zu trennen. Die erste Fördereinrichtung kann zum Beispiel einen Vibrationsförderer umfassen, der als Transport- oder Siebelement eine Rüttelplatte aufweist. Die erste Fördereinrichtung kann ebenso oder zusätzlich einen Siebrüttler oder Schwingsieb umfassen der/das eine zyklisch hin und her bewegte Siebplatte aufweist.

Die erste Fördereinrichtung 28 umfasst im vorliegenden Beispiel einen Bandförderer, der als Transport- oder Siebelement ein Transport- oder ein Siebband 50 aufweist, das insbesondere ein Band mit Aussparungen ist, das dazu ausgebildet ist, Feinstgut 10 von den Wurzelfrüchten 6 zu trennen. Vorzugsweise umfasst das Transport- oder Siebband 50 der ersten Fördereinrichtung ein "Igelband". Solche Igelbänder werden zum Beispiel von der Fa. Artemis unter der Bezeichnung "Igelstabband" vertrieben (siehe https://www.artemis-kautschuk.de/de/files/03.2017_Katalog_Extern_Artemis_gruen_DE.pdf, Seite 6-2).

Die erste Fördereinrichtung 28 kann jede beliebige Kombination aus einem oder mehreren der oben beschriebenen Förderer (z.B. Bandförderer und Vibrationsförderer) umfassen. Diese Förderer können aufeinander folgend angeordnet sein. Die erste Fördereinrichtung 28 kann z.B. ein Siebband oder Igelband aufweisen und eine Sieb- oder Rüttelplatte.

Die zweite Fördereinrichtung 30 ist dazu ausgebildet das Trenngut 22 zum Trennguteingang 36 zu fördern.

Die zweite Fördereinrichtung 30 umfasst mindestens ein Transport- oder ein Siebband insbesondere ein Band mit Aussparungen, das dazu ausgebildet ist, Feinstgut 10 das eine maximale Dimension, die kleiner ist als der maximale Wurzeldurchmesser, von den Wurzelfrüchten 6 zu trennen. Die zweite Fördereinrichtung 30, bzw. ihr Transport- oder Siebband, umfasst vorteilhafterweise ein Quadratstabband oder Lochstabband 52, das dazu ausgebildet und angeordnet ist das Trenngut 22 direkt von der Erntevorrichtung 20 zu empfangen. Das Quadratstabband oder Lochstabband 52 ist relativ unempfindlich gegen Verschleiß. Solche Quadratstabbänder oder Lochstabbänder werden zum Beispiel von der Fa. Fa. Artemis unter der Bezeichnung "4-Lochstabband" vertrieben (siehe https://www.artemis-kautschuk.de/de/files/03.2017_Katalog_Extern_Artemis_gruen_DE.pdf , Seite 5-8).

Die zweite Fördereinrichtung 30 weist weiterhin mindestens ein Igelband, im vorliegenden Falle ein erstes Igelband 54 und ein zweites Igelband 56 auf. Das erste Igelband 54 ist dem Quadratstabband oder Lochstabband 52 nachgeordnet und empfängt das Trenngut 22 vom Quadratstabband oder Lochstabband 52. Das zweite Igelband 56 ist komplett oberhalb der Trennstrecke 38 angeordnet und empfängt das Trenngut 22 vom ersten Igelband 54 und führt es dem Trennguteingang 36 zu.

Alternativ kann auf eines der zwei Igelbänder 54, 56 oder auf das Quadratstabband oder Lochstabband 52 verzichtet werden. Die Bänder 52, 54, 56 können je nach Konfiguration der Erntemaschine strukturiert oder konfiguriert sein und als Quadratstabband, Lochstabband, Igelband oder anderes Band ausgeführt sein.

Das Quadratstabband oder Lochstabband 52 weist eine Förderrichtung F3 auf, die im vorliegenden Fall in Fahrtrichtung EFR nach hinten, bzw. aufwärts nach hinten, gerichtet ist. Das erste Igelband 54 bzw. das zweite Igelband 56 weist eine Förderrichtung F4 bzw. F5 auf, die im vorliegenden Fall in Fahrtrichtung EFR nach hinten, bzw. aufwärts nach hinten gerichtet ist. Das zweite Igelband 54 erlaubt die Bauhöhe der Vorrichtung relativ klein zu halten.

Allgemein ist die Erntevorrichtung 20 dazu ausgebildet, die schmalen Wurzelfrüchte und Erdreich aus dem Boden zu fördern und als Trenngut 22 auf der zweiten Fördereinrichtung 30 abzulegen.

Die Erntevorrichtung 20 weist noch eine dritte Fördereinrichtung 60 auf, die einen Bandförderer 62 umfasst. Die dritte Fördereinrichtung 60 weist eine Förderrichtung F6 auf, und ist dazu ausgebildet, die schmalen Wurzelfrüchte 6 von der ersten Fördereinrichtung 28 zu erhalten und weiter zu fördern, zum Beispiel zu einer nicht dargestellten Reinigungsvorrichtung, Waschvorrichtung und/oder zu einem Bunker im Fahrzeug.

Die Benutzung der Vorrichtung beinhaltet einen oder mehrere der folgenden Schritte:
Zunächst wird das Erdreich und die Wurzelfrüchte 6 durch die Erntevorrichtung 20 aus dem Boden gehoben und als Trenngut 22 auf der zweiten Fördereinrichtung 30 abgelegt. Das Trenngut 22 wird durch die zweite Fördereinrichtung 30 in Richtung der Vorrichtung 26 zum Reinigen von schmalen Wurzelfrüchten gefördert.

Das Trenngut 22, das schmale Wurzelfrüchte und Grobgut sowie Feinstgut aufweist wird durch die zweite Fördereinrichtung 30 dem Trennguteingang 36 zugeführt.

Das Trenngut 22 wird über die Trennstrecke 38 geführt, wodurch zumindest Grobgut und die schmalen Wurzelfrüchte voneinander getrennt werden. Hierbei passieren die schmalen Wurzelfrüchte 6 den Walzenspalt zum Feingutausgang 42.

Falls das Trenngut 22 Klumpen aus Wurzelfrüchten 6 und anhaftendem Erdreich oder Steinen enthält, wobei diese Klumpen die Größe des Grobguts 8 aufweisen, so werden diese Klumpen, insbesondere sämtliche Klumpen, durch die Walzen 34 aufgebrochen und die Wurzelfrüchte 6 der aufgebrochenen Klumpen passieren den Walzenspalt 44. Das beim Aufbrechen entstehende Feinstgut passiert ebenfalls den Walzenspalt 44. Das übrige oder übrigbleibende Grobgut 8 wird zum Grobgutausgag befördert.

Das von den Wurzelfrüchten getrennte Grobgut 8 wird aus dem Grobgutausgang 40 ausgebracht.

Die schmalen Wurzelfrüchte 6 bzw. das Feingut, das Feinstgut umfasst, wird vom Feingutausgang zur ersten Fördereinrichtung 28 gefördert, im vorliegenden Falle durch die Schwerkraft. Durch die erste Fördereinrichtung 28 werden die schmalen Wurzelfrüchte 6 vom Feinstgut getrennt und anschließend der dritten Fördereinrichtung 60 zugeführt.

Die Vorrichtung 26 ist kompakt bauend und hat eine hohe relative Abscheideleistung der schmalen Wurzeln von Erdreich, Erdklumpen und Steinen, insbesondere eine höhere relative Abscheideleistung als ein vergleichbares Siebband oder Igelband.

## Patentansprüche

1. Vorrichtung (26) zum Reinigen von schmalen Wurzelfrüchten, wobei die Wurzelfrüchte (6) einen maximalen Wurzeldurchmesser (WDmax) und eine Wurzellänge (WL) aufweisen, wobei ein Verhältnis von Wurzellänge maximalem Wurzeldurchmesser WL/WDₘₐₓ grösser als 2 ist, wobei die Vorrichtung zum Reinigen von Wurzelfrüchten umfasst:
- eine Walzenvorrichtung (32) umfassend zwei drehbare Walzen (34) die einen Trennguteingang (36), eine Trennstrecke (38), einen Grobgutausgang (40), einen Feingutausgang (42) und einen Walzenspalt (44) bilden, und
- eine der Walzenvorrichtung (32) nachgeschaltete erste Fördereinrichtung (28), wobei die Trennstrecke (38) durch die Oberseite der Walzen (34) gebildet ist, der Feingutausgang (42) unterhalb des Walzenspalts (44) angeordnet ist, und der Grobgutausgang (40) an dem, dem Trennguteingang (36) gegenüberliegenden, Ende der Trennstrecke (38) liegt,
**dadurch gekennzeichnet, dass** die Walzenvorrichtung (32) derart ausgebildet ist, dass der Walzenspalt (44) groß genug ist um die schmalen Wurzelfrüchte zum Feingutausgang (42) hindurchpassieren zu lassen und klein genug ist, um Grobgut (8), das eine minimale Dimension, die grösser ist als der maximale Wurzeldurchmesser, nicht passieren zu lassen oder zurückzuhalten und zum Grobgutausgang (40) zu transportieren, und dass die erste Fördereinrichtung (28) unterhalb des Walzenspalts am Feingutausgang (42) angeordnet ist und dazu ausgebildet ist, sämtliche durch den Walzenspalt (44) hindurchtretenden schmalen Wurzelfrüchte aufzunehmen.

2. Vorrichtung nach Anspruch 1, wobei mindestens eine, vorzugsweise jede der drehbaren Walzen (34) eine Reinigungs- und Transportwendel (46) aufweist, die dazu ausgebildet ist Verunreinigungen, die das Grobgut umfassen, von den Wurzelfrüchten zu lösen und das Grobgut zum Grobgutausgang (40) zu transportieren, vorzugsweise wobei die Reinigungs- und Transportwendeln (46) der zwei drehbarer Walzen (34) gegenläufig sind.

3. Vorrichtung nach Anspruch 1 oder 2, wobei der Trennguteingang (34) in Fahrtrichtung (EFR) hinter dem Grobgutausgang (40) angeordnet ist oder in Fahrtrichtung in gleicher Höhe angeordnet ist, und/oder wobei der Trennguteingang (36) in einer Richtung quer zur Fahrtrichtung seitlich vom Grobgutausgang (40) angeordnet ist.

4. Vorrichtung nach einem der Ansprüche 1 bis 3, wobei die erste Fördereinrichtung (28) eine Förderrichtung (F2) aufweist, die entgegengesetzt zu einer Förderrichtung (F1) der Trennstrecke (38) vom Trennguteingang zum Grobgutausgang (40) ist.

5. Vorrichtung nach einem der Ansprüche 1 bis 4, wobei die erste Fördereinrichtung (28) ein bewegliches Transport- oder Siebelement umfasst, insbesondere ein Element mit Aussparungen, das dazu ausgebildet ist, Feinstgut (10) das eine maximale Dimension, die kleiner ist als der maximale Wurzeldurchmesser, von den Wurzelfrüchten (6) zu trennen.

6. Vorrichtung nach Anspruch 5, wobei das Transport- oder Siebelement ein Transport- oder ein Siebband (50) ist, insbesondere ein Band mit Aussparungen, wobei insbesondere das Transport- oder Siebband (50) der ersten Fördereinrichtung (28) ein Igelband umfasst.

7. Vorrichtung nach einem der Ansprüche 1 bis 6, wobei das Verhältnis von Wurzellänge zu maximalem Wurzeldurchmesser WL/WDₘₐₓ grösser als 4, vorzugsweise grösser als 5; grösser als 6, grösser als 7, grösser als 8 oder grösser als 9 ist.

8. Vorrichtung nach einem der Ansprüche 1 bis 7, wobei die schmalen Wurzelfrüchte (6) aus der folgenden Gruppe ausgewählt sind: Löwenzahnwurzel, Petersilienwurzel, Chicoréewurzel (Cichorium intybus var. foliosum), Pastinakenwurzel (Pastinaca sativa), Karottenwurzel, Maniocwurzel (Manihot esculenta).

9. Reinigungsapparat (24) zum Reinigen von schmalen Wurzelfrüchten, **dadurch gekennzeichnet, dass** er eine Vorrichtung (26) zum Reinigen von schmalen Wurzelfrüchten nach einem der vorhergehenden Ansprüche umfasst, und dass der Reinigungsapparat (24) weiterhin eine zweite Fördereinrichtung (30) umfasst, dazu ausgebildet Trenngut (22) zum Trennguteingang (36) zu fördern.

10. Reinigungsapparat nach Anspruch 9, wobei die zweite Fördereinrichtung (30) mindestens ein Transport- oder ein Siebband umfasst, insbesondere ein Band mit Aussparungen, das dazu ausgebildet ist, Feinstgut (10) das eine maximale Dimension, die kleiner ist als der maximale Wurzeldurchmesser, von den Wurzelfrüchten zu trennen, und wobei insbesondere das Transport- oder Siebband der zweiten Fördereinrichtung ein Igelband oder ein Quadratstabband oder Lochstabband umfasst.

11. Ernte- und Reinigungsmaschine (2), umfassend
eine Erntevorrichtung (20) zum Ernten und Reinigen von schmalen Wurzelfrüchten (6),
wobei die Ernte- und Reinigungsmaschine eine Erntefahrtrichtung (EFR) definiert,
**dadurch gekennzeichnet, dass** die Ernte- und Reinigungsmaschine einen Reinigungsapparat nach einem der Ansprüche 9 oder 10, umfasst, und dass
die Erntevorrichtung (20) dazu ausgebildet ist, die schmalen Wurzelfrüchte (6) und Erdreich aus dem Boden zu fördern und als Trenngut (22) auf der zweiten Fördereinrichtung (30) abzulegen.

12. Verfahren zum Reinigen von schmalen Wurzelfrüchten, umfassend die Benutzung einer Vorrichtung nach einem der Ansprüche 1 bis 8 oder eines Reinigungsapparats nach einem der Ansprüche 9 oder 10, oder einer Ernte- und Reinigungsmaschine nach Anspruch 11, **gekennzeichnet durch** die folgenden Schritte:
- Zuführen von Trenngut (22), das schmale Wurzelfrüchte und Grobgut sowie Feinstgut aufweist, zum Trennguteingang,
- Führen des Trenngutes (22) über die Trennstrecke, wodurch zumindest Grobgut (8) und schmale Wurzelfrüchte voneinander getrennt werden und wobei die schmalen Wurzelfrüchte den Walzenspalt zum Feingutausgang passieren,
- Ausbringen des Grobgutes (8) aus dem Grobgutausgang, und
- Zuführen der schmalen Wurzelfrüchte bzw. des Feingutes vom Feingutausgang zur ersten Fördereinrichtung.

## Claims

1. An apparatus (26) for cleaning narrow root crops, the root crops (6) having a maximum root diameter (WDmax) and a root length (WL), a ratio of root length to maximum root diameter WL/WDₘₐₓ being greater than 2, the apparatus for cleaning root crops comprising:
- a roller device (32) comprising two rotatable rollers (34) forming a separating material inlet (36), a separating track (38), a coarse material outlet (40), a fine material outlet (42) and a roller gap (44), and
- a first conveyor (28) downstream of the roller device (32),
- the separating track (38) being formed by the upper side of the rollers (34), the fine material outlet (42) being located below the roller gap (44), and the coarse material outlet (40) being located at the end of the separating track (38) opposite the separating material inlet (36),
caracterized in that
roller device (32) is designed so that the roller gap (44) is large enough to allow the narrow root crops to pass through to the fine material outlet (42) and small enough to prevent coarse material (8) with a minimum dimension greater than the maximum root diameter from passing through or being retained and transported to the coarse material outlet (40), and in that
the first conveyor (28) is arranged below the roller gap at the fine material outlet (42) and is designed to receive all narrow root crops passing through the roller gap (44).

2. A device according to Claim 1, wherein at least one, preferentially each, of the rotatable rollers (34) has a cleaning and transport spiral (46) adapted to detach impurities comprising the coarse material from the root crops and to transport the coarse material to the coarse material outlet (40), preferentially wherein the cleaning and transport spirals (46) of the two rotatable rollers (34) are counter-rotating.

3. Device according to Claim 1 or 2, wherein the separating material inlet (34) is arranged behind the coarse material outlet (40) in the direction of travel (EFR) or is arranged at the same height in the direction of travel, and/or wherein the separating material inlet (36) is arranged laterally to the coarse material outlet (40) in a direction transverse to the direction of travel.

4. A device according to one of the Claims 1 to 3, wherein the first conveyor (28) has a conveying direction (F2) that is opposite to a conveying direction (F1) of the separating track (38) from the separating material inlet to the coarse material outlet (40).

5. A device according to any one of Claims 1 to 4, wherein the first conveyor (28) comprises a movable transport or sieve element, in particular an element with recesses, adapted to separate fine material (10) having a maximum dimension smaller than the maximum root diameter from the root crops (6).

6. A device according to Claim 5, wherein the transport or sieve element is a transport belt or a sieve belt (50), in particular a belt with recesses, wherein in particular the transport belt or sieve belt (50) of the first conveying device (28) comprises a hedgehog belt.

7. A device according to one of the Claims 1 to 6, wherein the ratio of root length to maximum root diameter WL/WDₘₐₓ is greater than 4, preferentially greater than 5; greater than 6, greater than 7, greater than 8 or greater than 9.

8. A device according to one of the Claims 1 to 7, wherein the narrow root crops (6) are selected from the group consisting of: dandelion root, parsley root, chicory root (cichorium intybus var. foliosum), parsnip root (pastinaca sativa), carrot root, manioc root (manihot esculenta).

9. A cleaning apparatus (24) for cleaning narrow root crops **characterized in that** it comprises a device (26) for cleaning narrow root crops according to any one of the preceding claims, and **in that**
the cleaning apparatus (24) further comprises a second conveyor (30) designed to convey separation material (22) to the separating material inlet (36).

10. A cleaning apparatus according to Claim 9, wherein the second conveyor (30) comprises at least one transport belt or a sieve belt, in particular a belt with recesses, which is designed to separate fine material (10) having a maximum dimension smaller than the maximum root diameter of the root crops, and wherein in particular the transport belt or sieve belt of the second conveyor comprises a hedgehog belt or a square rod belt or perforated rod belt.

11. A harvesting and cleaning machine (2) comprising
a harvesting device (20) for harvesting and cleaning narrow root crops (6),
whereby the harvesting and cleaning machine defines a harvesting travel direction (EFR),
**characterized in that** the harvesting and cleaning machine comprises a cleaning apparatus according to one Claims 9 or 10, and **in that**
the harvesting device (20) is designed to convey the narrow root crops (6) and soil from the ground and to deposit them as separated material (22) onto the second conveyor (30).

12. A method of cleaning narrow root crops comprising use of a device according to any one of Claims 1 to 8 or a cleaning apparatus according to any one of Claims 9 or 10, or a harvesting and cleaning machine according to Claim 11, **characterized by** the following steps:
- feeding separating material (22), which has narrow root crops, coarse material and fine material, to the separating material inlet,
- guiding the separating material (22) over the separating track, whereby at least coarse material (8) and narrow root crops are separated from each other and whereby the narrow root crops pass the roller gap to the fine material exit,
- discharging the coarse material (8) from the coarse material outlet, and
- feeding the narrow root crops or fine material from the fine material outlet to the first conveyor.

## Revendications

1. Dispositif (26) pour le nettoyage de légumes-racines minces, dans lequel les légumes-racines (6) présentent un diamètre de racine maximal (WDmax) et une longueur de racine (WL),
dans lequel un rapport de longueur de racine au diamètre de racine maximal WL/WDₘₐₓ est supérieur à 2,
dans lequel le dispositif de nettoyage de légumes-racines comprend :
- un dispositif à rouleaux (32) comprenant deux rouleaux (34) rotatifs qui forment une entrée de produit à séparer (36), une section de séparation (38), une sortie de produit grossier (40), une sortie de produit fin (42) et un espacement entre rouleaux (44), et
- un premier équipement de convoyage (28) placé en aval du dispositif à rouleaux (32),
dans lequel la section de séparation (38) est formée par la face supérieure des rouleaux (34), la
sortie de produit fin (42) est disposée sous l'espacement entre rouleaux (44), et la sortie de produit grossier (40) se situe à l'extrémité de la section de séparation (38) opposée à l'entrée de produit à séparer (36),
**caractérisé en ce que**
le dispositif à rouleaux (32) est réalisé de telle sorte que l'espacement entre rouleaux (44) est suffisamment grand pour laisser passer les légumes-racines minces
vers la sortie de produit fin (42)
et est suffisamment petit pour ne pas laisser passer ou pour retenir le produit grossier (8)
qui présente une dimension minimale qui est supérieure au diamètre de racine maximal, et pour le transporter vers la sortie de produit grossier (40), et que
le premier équipement de convoyage (28) est disposé sous l'espacement entre rouleaux à la sortie de produit fin (42)
et est réalisé pour recevoir l'ensemble des légumes-racines minces passant à travers l'espacement entre rouleaux (44).

2. Dispositif selon la revendication 1, dans lequel au moins un, de préférence chacun des rouleaux rotatifs (34) présente une hélice de nettoyage et de transport (46) qui est réalisée pour détacher les impuretés, qui comprennent le produit grossier, des légumes-racines et pour transporter le produit grossier vers la sortie de produit grossier (40),
de préférence dans lequel les hélices de nettoyage et de transport (46) des deux rouleaux (34) rotatifs tournent en sens inverse.

3. Dispositif selon la revendication 1 ou 2, dans lequel l'entrée de produit à séparer (34) est disposée dans le sens de la marche
(EFR) derrière la sortie de produit grossier (40) ou est disposée à la même hauteur dans le sens de la marche, et/ou dans lequel l'entrée de produit à séparer (36) est disposée latéralement par rapport à la sortie de produit grossier (40) dans une direction transversale au sens de la marche.

4. Dispositif selon l'une quelconque des revendications 1 à 3, dans lequel le premier équipement de convoyage (28)
présente une direction de convoyage (F2) qui est opposée à une direction de convoyage (F1) de la section de séparation (38) allant de l'entrée de produit à séparer à la sortie de produit grossier (40).

5. Dispositif selon l'une quelconque des revendications 1 à 4, dans lequel le premier équipement de convoyage (28) comprend un élément de transport ou de criblage mobile, en particulier un élément à évidements, qui est réalisé pour séparer le produit fin (10), qui présente une dimension maximale qui est inférieure au diamètre de racine maximal, des légumes-racines (6).

6. Dispositif selon la revendication 5, dans lequel l'élément de transport ou de criblage est une bande de transport ou de criblage (50), en particulier une bande à évidements, dans lequel en particulier la bande de transport ou de criblage (50) du premier équipement de convoyage (28)
comprend un tapis à tétines.

7. Dispositif selon l'une quelconque des revendications 1 à 6, dans lequel le rapport de la longueur de racine au diamètre de racine maximal WL/WDₘₐₓ est supérieur à 4, de préférence supérieur à 5 ; supérieur à 6, supérieur à 7, supérieur à 8 ou supérieur à 9.

8. Dispositif selon l'une quelconque des revendications 1 à 7, dans lequel les légumes-racines minces (6) sont choisis dans le groupe suivant : pissenlit racine, persil racine, chicorée racine (Cichorium intybus var. foliosum),panais racine (Pastinaca sativa), carotte racine, manioc racine (Manihot esculenta).

9. Appareil de nettoyage (24) pour nettoyer des légumes-racines minces, **caractérisé en ce qu'**il comprend un dispositif (26) pour nettoyer des légumes-racines minces selon l'une quelconque des revendications précédentes, et que l'appareil de nettoyage (24) comprend en outre un deuxième équipement de convoyage (30) réalisé pour convoyer le produit à séparer (22) vers l'entrée de produit à séparer (36).

10. Appareil de nettoyage selon la revendication 9, dans lequel le deuxième équipement de convoyage (30) comprend au moins une bande de transport ou de criblage, en particulier une bande à évidements, qui est réalisée pour séparer le produit fin (10), qui présente une dimension maximale qui est inférieure au diamètre de racine maximal, des légumes-racines, et dans lequel en particulier la bande de transport ou de criblage du deuxième équipement de convoyage comprend un tapis à tétines ou une bande à barres carrées ou bande à barres perforées.

11. Machine de récolte et de nettoyage (2), comprenant
un dispositif de récolte (20) pour la récolte et le nettoyage de légumes-racines minces (6),
dans lequel la machine de récolte et de nettoyage définit un sens de marche pour la récolte (EFR),
**caractérisée en ce que** la machine de récolte et de nettoyage comprend un appareil de nettoyage selon l'une quelconque des revendications 9 ou 10, et que
le dispositif de récolte (20) est réalisé pour extraire les légumes-racines minces (6) et la terre du sol et pour les déposer en tant que produit à séparer (22) sur le deuxième équipement de convoyage (30).

12. Procédé de nettoyage de légumes-racines minces, comprenant l'utilisation d'un dispositif selon l'une quelconque des revendications 1 à 8 ou d'un appareil de nettoyage selon l'une quelconque des revendications 9 ou 10, ou d'une machine de récolte et de nettoyage selon la revendication 11,**caractérisé par** les étapes suivantes :
- l'acheminement de produit à séparer (22), qui présente des légumes-racines minces et du produit grossier ainsi que du produit fin, vers l'entrée de produit à séparer,
- le guidage du produit à séparer (22) sur la section de séparation, ce qui a pour effet qu'au moins le produit grossier (8) et les légumes-racines minces sont séparés les uns des autres et dans lequel les légumes-racines minces passent par l'espacement entre rouleaux vers la sortie de produit fin,
- l'évacuation du produit grossier (8) de la sortie de produit grossier, et
- l'acheminement des légumes-racines minces ou du produit fin à partir de la sortie de produit fin vers le premier équipement de convoyage.
